# EUROPEAN PATENT SPECIFICATION

(11) **EP 1 139 729 B1**
(45) Date of publication and mention of the grant of the patent: **15.05.2002**
(21) Application number: 00900962.2
(22) Date of filing: 04.01.2000
(51) Int. Cl.: A01K 61/00, A01K 63/00

(54) **A DEVICE FOR CLEANING AQUARIUM WINDOWS, IN PARTICULAR THE INSIDE THEREOF, AS WELL AS A METHOD FOR CLEANING AQUARIUM WINDOWS**
REINIGUNGSVORRICHTUNG FÜR AQUARIENFENSTER, INSBESONDER DIE INNENSEITEN, UND VERFAHREN ZUR REINIGUNG DER FENSTER EINES AQUARIUMS
DISPOSITIF DE NETTOYAGE DE VITRES D'AQUARIUMS, ET NOTAMMENT DE L'INTERIEUR DE TELLES VITRES, ET PROCEDE DE NETTOYAGE CORRESPONDANT

(30) Priority: 07.01.1999 NL 1010980
(43) Date of publication of application: 10.10.2001
(73) Proprietor: Bakker Holding Son B.V., 5692 EL Son (NL)
(72) Inventor: BAKKER, Gerardus, Henricus, NL-5561 VB Riethoven (NL)
(74) Representative: Van kan, Johan Joseph Hubert, Ir.
(86) International application number: NL0000004
(87) International publication number: WO0040080

(56) References cited:
- GB-A- 2 105 977
- US-A- 4 977 637
- US-A- 5 515 570

## Description

The present invention relates to a device for cleaning aquarium windows, in particular the inside thereof, comprising an interior element, which is to be placed on the inside of the aquarium window, as well as an exterior element, which is to be placed on the outside of the aquarium window, which interior and exterior elements attract each other under the influence of magnetic force, so that movement of the exterior element along the aquarium window causes the interior element to follow this movement. The present invention furthermore relates to a method for cleaning aquarium windows, in particular the inside thereof, using two elements fitted with magnets.

A device and method of this kind for cleaning the inside of aquarium windows, using magnets, is known from British patent application No. 2,105,977. The apparatus disclosed therein comprises an interior device having a permanent magnetic field and a pair of cleaning faces substantially perpendicular to each other, and an exterior device having a permanent magnetic field for manipulating the interior device. When apparatus of this kind is used, the interior device is placed on the inside of the aquarium window, after which the exterior device is placed on the outside on the aquarium window, with the magnetic forces causing the two devices to "stick" to the aquarium window. When the exterior device is moved along the aquarium window, the interior device will follow the movements of the exterior device and thus clean the inside of the aquarium window. A drawback of such apparatus is the fact that when the magnetic contact is broken, the interior device will sink to the bottom of the aquarium, so that it will have to be removed therefrom by means of a scoop net or by hand. Another important drawback is the fact that when such a method of cleaning aquarium windows is used, the interior device must be pressed against the inside of the aquarium window by hand, whilst at the same moment the exterior device must be placed against the outside of the aquarium window, which makes it necessary for the upper side of the window to be readily and easily accessible. In many aquariums a cover plate is present on the upper side of the aquarium, however, so that the placing of the interior device is not an easy operation, which considerably increases the risk of the interior device suddenly becoming detached and thus sinking to the bottom.

The use of magnetic forces for cleaning windows, using a window cleaner having magnets, is also known from Netherlands patent application 8700802. The window cleaner known from said publication is especially suitable for cleaning windows of a building on the outside, which windows cannot be reached from ground level or from an upper floor. The problem that has been observed by the present applicant, that is, the sinking to the bottom of an element suitable for cleaning windows, is not known therefrom, and accordingly a window cleaner as disclosed in said publication does not provide the solution for the problem observed by the present applicant.

US patent No. 5,515,570 relates to a manually operated window wiper, which document does not describe the problem observed by the present applicant, viz. the sinking to the bottom of the element suitable for cleaning windows. US patent No. 4,977,637 furthermore discloses a magnetic window cleaning apparatus wherein a suction cup is connected via a hose to the window cleaning apparatus so as to prevent the latter from becoming detached from the window to be cleaned.

Although devices for cleaning aquarium windows are known from US patent No. 4,571,766, European patent application No. 0 527 580 and US patent No. 5,601,322, such devices are not fitted with one or more magnets.

The object of the present invention is to overcome the above problems.

Another object of the present invention is to provide a method which makes it possible to clean the inside of aquarium windows quickly and efficiently in a simple manner.

Another object of the present invention is to provide a device for cleaning aquarium windows, which device can be produced by means of a simple production method.

The device as referred to in the introduction is according to the present invention characterized in that the interior element is so constructed that, once the magnetic force has been removed, the interior element will remain afloat on the liquid medium that is present in the aquarium.

Since the element to be placed on the inside of the aquarium, which element can be considered to be the interior element hereafter, is designed to have buoyancy, said element will not sink to the bottom upon removal of the magnetic force. When for example the magnetic force between the interior element and the element to be placed on the outside of the aquarium window, which element can be considered to be the exterior element hereafter, is removed, the interior element will rise to the surface of the liquid, after which the floating interior element can be drawn towards the aquarium window through manipulation of the exterior element, so that a close contact between the exterior and interior elements is established again. Since liquid flows occur inside the aquarium, there will always be a moment when the interior element floating on the liquid is located within the magnetic field of the element present on the outside of the aquarium window, so that the contact between the two elements can be reestablished.

In a special embodiment of the present invention it is preferable to design the device so that it comprises an air chamber which is to give the interior element buoyancy.

The presence of air in the element to be placed on the inside of the aquarium window ensures that the interior element will rise to the liquid surface upon removal of the magnetic force rather than sink to the bottom.

In another preferred embodiment of the present invention it is preferable with a view to obtaining buoyancy that the element to be placed on the inside of the aquarium window includes a material which has a density lower than that of the liquid medium which is present in the aquarium.

Suitable materials are for example plastic, foam, wood and the like, whereby it is of course important in view of the buoyancy thereof that the density of the eventual element to be placed on the inside of the aquarium window is lower than the density of the liquid medium which is present in the aquarium, so that the buoyancy is ensured. When such a material is used, a leak in the air chamber of the interior element, for example, which allows water to penetrate into the interior element, will not cause the interior element to sink to the bottom.

It is in particular preferable that both the element to be placed on the inside of the aquarium window and the element to be placed on the outside of the aquarium window are fitted with one or more magnets.

By fitting both elements with magnets, a strong connection between the two elements is ensured, which connection is in particular very important when very thick aquarium windows are to be cleaned. A powerful magnetic field is also required when the interior element is to clean the aquarium windows near the bottom of the aquarium, because the force exerted on the interior element is considerably larger there than near the liquid surface. Moreover, by using magnets in both elements the magnetic contact will not easily be broken, which is very important when cleaning round certain obstacles, such as pumps, water plants, decorative stones.

In a special embodiment of the present invention it is desirable for the interior element to include a material which can be attracted by a magnetic field rather than being fitted with the magnets as described above.

The interior element of such an embodiment may for example include an iron plate or any other material which is capable of being attracted by magnetic forces. A considerable saving in weight can be achieved by using such a material instead of magnets. In addition, a cost reduction can be achieved in this manner.

In order to obtain a good cleaning effect while using the element to be placed on the inside of the aquarium window, it is in particular preferable for said element to comprise a rough surface on the side parallel to the aquarium window.

As a result of the provision of a rough surface, the aquarium window, on which dirt is present, can easily be cleaned by moving the rough surface of the interior element along said window. A rough surface can for example be obtained by providing the interior element with a scale-like or grid-like structure. Such a structure can be obtained by means of an injection moulding process, using a mould of simple design.

In order to prevent the outside of the aquarium window from becoming scratched, the element to be placed on the outside of the aquarium window preferably has a smooth surface on the side parallel to the aquarium window. Such a smooth surface of the exterior element can for example be obtained by using a felt-like material.

The present invention furthermore relates to a method for cleaning aquarium windows, in particular the inside thereof, using an interior element, which is to be placed on the inside of the aquarium window, and an exterior element, which is to be placed on the outside of the aquarium window, which elements attract each other under the influence of magnetic force, wherein the exterior element is moved along the aquarium window and the interior element follows said movement under the influence of the magnetic force, which method is characterized in that the device as described above is used.

The present invention will now be explained in more detail by means of an example, wherein reference is made to the appended drawings, whereby it should be noted, however, that variations and modifications are possible within the scope of the appended claims without departing from the essence of the present invention.

Figure 1 schematically shows the element according to the invention that is to be placed on the inside of the aquarium window.

Figure 2 schematically shows the element according to the invention that is to be placed on the outside of the aquarium window.

Figure 3 schematically shows the situation in which the device as well as the method according to the present invention are used for cleaning aquarium windows.

Figure 4 schematically shows the situation wherein the magnetic contact between the interior element of Figure 1 and the exterior element of Figure 2 is broken.

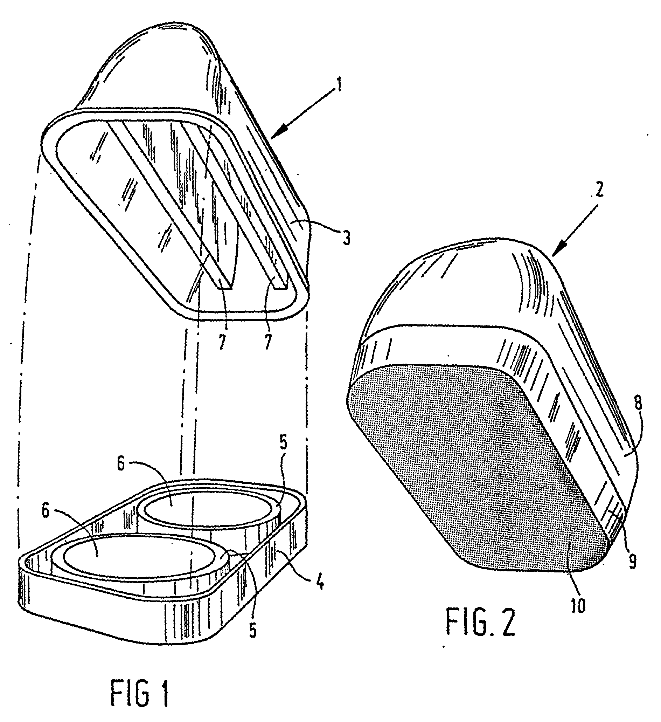

Figure 1 schematically shows the interior element 1, which interior element 1 in particular comprises a segment 3 and a segment 4, which segment 3 can be clamped down on segment 4. Segment 4 is furthermore provided with one or more recesses 5, into which one or more magnets 6 can be placed. One or more stiffening plates are provided in segment 3 for the purpose of stiffening said segment. By placing segment 3 onto segment 4, an interior element 1 is obtained which will remain afloat in the liquid medium present in the aquarium, due to the presence of the air chamber enclosed by segment 3 and segment 4. The bottom plate (not shown) of segment 4 has a rough surface so as to provide a cleaning effect.

Figure 2 schematically shows the exterior element 2. Said exterior element 2 in particular comprises two segments 8 and 9, which segments 8, 9 can be clamped together. Preferably, segment 9 comprises one or more recesses (not shown), in which one or more magnets (not shown) are present. Such recesses may for example correspond to the aforesaid recesses 5 that are shown in Figure 1. In order to prevent the bottom plate 10 of segment 9, which bottom plate 10 abuts against the outside of the aquarium window, from making scratches on said window, bottom plate 10 preferably has a smooth surface, which is for example obtained by using a felt-like material. Although the description of interior element 1 and exterior element 2 mentions the presence of one or more magnets 6 in segment 4 as well as in segment 9, it is desirable in a specific embodiment that only one of the segments 4, 9 contains one or more magnets, with the other segment including a material which is capable of being attracted by a magnetic field. Although the buoyancy of the element 1 to be placed on the inside of the aquarium window is provided by an air chamber enclosed by segment 3 and segment 4 in Figure 1, it should be understood that the provision of such buoyance is not limited thereto. Thus it is desirable in specific embodiments to form interior element 1 of a material such that interior element 1 has a density lower than that of the liquid medium in the aquarium. Thus it is possible to form interior element 1 of a foam material, for example, so that possible leakage of air, for example via the joint between segment 3 and segment 4, due to damage or poor adhesion will not cause the interior element 1 to sink to the bottom yet. Although two circular recesses 5 are used in Figure 1, it should be apparent that the present invention is not limited thereto and that any number of recesses 5 and any geometric form can be used.

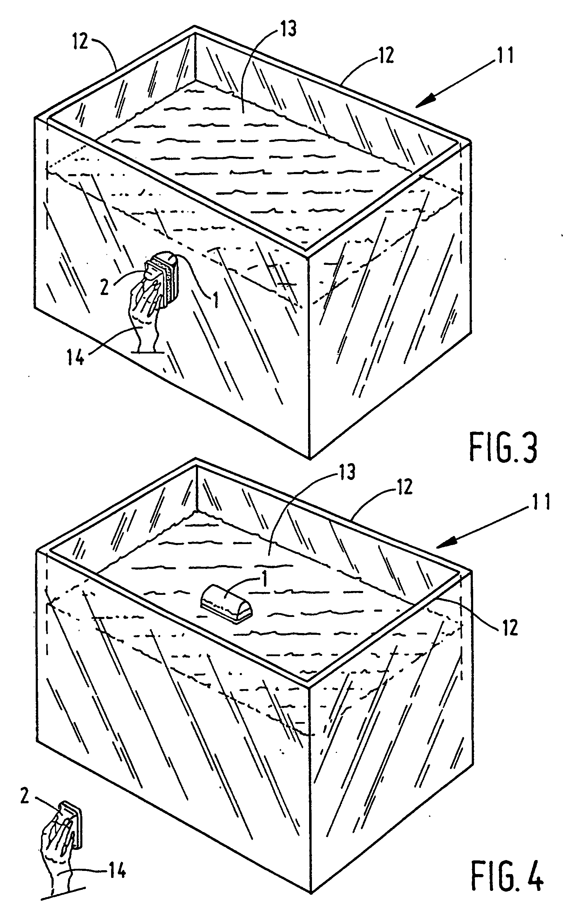

Figures 3 and 4 schematically show the method according to the present invention. In practice, aquarium 11, which has upright edges 12 made of a transparent material, such as glass, and which is filled with a liquid medium 13, for example water, will exhibit a deposit on the inside of the aquarium window 11 after some time. Such a deposit, which is generally caused by algal growth, is considered to be objectionable because it leads to a reduced transparency of the upright edges 12. For the sake of simplicity, the apparatus usually present in an aquarium, such as pumps and a purifying element, water plants, fish and the like are not shown in aquarium 11. The interior element 1 is placed on the water surface 13, after which the exterior element 2 is brought into contact, preferably manually, with the upright edge 12, for example with the schematically indicated hand 14. Due to the magnetic force between interior element 1 and exterior element 2, element 1 will be drawn to the upright edge 12 and a connection, as schematically shown in Figure 3, will be made. When exterior element 2 is moved forwards and backwards on the outside of the upright edge 12, the element 1 to be placed on the inside of the aquarium window will follow these movements under the influence of the prevailing magnetic force between interior element 1 and exterior element 2, as a result of which the inside of the aquarium window or the upright edge 12 will be cleaned. The special geometric shape of segment .3 of interior element 1 makes it easy for the interior element to move from one upright edge 12 to the other upright edge 12.

Figure 4 schematically shows the situation in which there is no magnetic contact between interior element 1 and exterior element 2. The interior element 1 thus floats on the liquid surface without sinking to the bottom, unlike prior art window cleaners, which will indeed sink to the bottom. The magnetic contact between interior element 1 and exterior element 2 can now be easily restored by moving exterior element 2 near aquarium 11, so that element 1 will be drawn towards upright edge 12 under the influence of the magnetic force it experiences. This will lead to the situation as shown in Figure 3 again. By making the interior element 1 to be placed on the inside of the aquarium window or upright edge 12 of such a material which is inert to the liquid medium 13, it is possible to leave interior element 1 permanently in aquarium 11, so that the aquarium window 12 can be cleaned at any desired moment merely by manipulating exterior element 2 near aquarium window 12.

Although the present invention is described herein as comprising an interior element 1 and an exterior element 2, it should be understood that the present invention is by no means limited to such a specific embodiment. Thus it is possible to interchange elements 1 and 2, so that element 1 or element 2 can be placed on the outside of the aquarium window, whereby it stands to reason that in such an embodiment the element which is placed inside the aquarium window will have buoyancy.

## Claims

1. A device for cleaning aquarium windows, in particular the inside thereof, comprising an interior element (1), which is to be placed on the inside of the aquarium window (12), as well as an exterior element (2), which is to be placed on the outside of the aquarium window (12), which interior and exterior elements (1,2) attract each other under the influence of magnetic force, so that movement of the exterior element along the aquarium window causes the interior element to follow this movement, **characterized in that** the element (1), which is to be placed on the inside of the aquarium, is so constructed that, once the magnetic force has been removed, the interior element (1) will remain afloat on the liquid medium (13) that is present in the aquarium (11).

2. A device according to claim 1, **characterized in that** the interior element (1) comprises an air chamber which gives the interior element buoyancy.

3. A device according to any one of the claims 1 - 2, **characterized in that** the interior element (1), in order to obtain buoyancy, includes a material which has a density lower than that of the liquid medium (13) which is present in the aquarium (11).

4. A device according to any one of the claims 1 - 3, **characterized in that** both the interior element (1) and the exterior element (2) are fitted with one or more magnets (6).

5. A device according to any one of the claims 1 - 3, **characterized in that** the interior element (1) includes a material which is capable of being attracted by a magnetic field.

6. A device according to any one of the claims 1 - 5, **characterized in that** the interior element (1) is provided with a rough surface on the side parallel to the aquarium window (12).

7. A device according to any one of the claims 1 - 5, **characterized in that** the exterior element (2) is provided with a smooth surface on the side parallel to the aquarium window (12).

8. A device according to claim 7, **characterized in that** said smooth surface is obtained by using a felt-like material.

9. A method for cleaning aquarium windows, in particular the inside thereof, using an interior element (1), which is to be placed on the inside of the aquarium window (12), and an exterior element (2), which is to be placed on the outside of the aquarium window, which elements attract each other under the influence of magnetic force, wherein the exterior element (2) is moved along the aquarium window and the interior element follows said movement under the influence of the magnetic force, **characterized in that** the device according to any one of the claims 1 - 8 is used.

## Patentansprüche

1. Vorrichtung zur Reinigung von Aquariumfenstern, insbesondere deren Innenseite, umfassend ein an der Innenseite des Aquariumfensters (12) zu positionierendes inneres Element (1) sowie ein an der Außenseite des Aquariumfensters (12) zu positionierendes äußeres Element (2), wobei die inneren und äußeren Elemente (1), (2) sich gegenseitig unter der Wirkung magnetischer Kraft anziehen, so daß eine Bewegung des äußeren Elements entlang des Aquariumfensters bewirkt, daß das innere Element dieser Bewegung folgt,
**dadurch gekennzeichnet,**
**daß** das Element (1), welches an der Innenseite des Aquariums positioniert ist, so konstruiert ist, daß das innere Element (1) auf dem im Aquarium (11) enthaltenen flüssigen Medium (13) aufschwimmt, sobald die magnetische Kraft entfernt wird.

2. Vorrichtung nach Anspruch 1, **dadurch gekennzeichnet, daß** das innere Element (1) eine Luftkammer umfaßt, die dem inneren Element Auftrieb verleiht.

3. Vorrichtung nach Anspruch 1 oder 2, **dadurch gekennzeichnet, daß** das innere Element (1) zur Erlangung von Auftrieb ein Material beinhaltet, das eine geringere Dichte hat als das in dem Aquarium (11) vorhandene flüssige Medium (13).

4. Vorrichtung nach einem der Ansprüche 1 bis 3, **dadurch gekennzeichnet, daß** sowohl das innere Element (1) als auch das äußere Element (2) mit einem oder mehreren Magneten (6) versehen sind.

5. Vorrichtung nach einem der Ansprüche 1 bis 3, **dadurch gekennzeichnet, daß** das innere Element (1) ein Material beinhaltet, das von einem Magnetfeld angezogen werden kann.

6. Vorrichtung nach einem der Ansprüche 1 bis 5, **dadurch gekennzeichnet, daß** an dem inneren Element (1) auf der zu dem Aquariumfenster (12) parallelen Seite eine rauhe Oberfläche vorgesehen ist.

7. Vorrichtung nach einem der Ansprüche 1 bis 5, **dadurch gekennzeichnet, daß** an dem äußeren Element (2) auf der zu dem Aquariumfenster (12) parallelen Seite eine weiche Oberfläche vorgesehen ist.

8. Vorrichtung nach Anspruch 7, **dadurch gekennzeichnet, daß** die weiche Oberfläche durch Verwendung eines filzartigen Materials erhalten wird.

9. Verfahren zur Reinigung von Aquariumfenstern, insbesondere deren Innenseite, wobei ein an der Innenseite des Aquariumfensters (12) anzuordnendes inneres Element (1) und ein an der Außenseite des Aquariumfensters anzuordnendes äußeres Element (2) verwendet wird, wobei die Elemente sich gegenseitig unter dem Einfluß einer magnetischen Kraft anziehen, wobei das äußere Element (2) entlang dem Aquariumfenster bewegt wird und das innere Element der Bewegung unter dem Einfluß der magnetischen Kraft folgt, **dadurch gekennzeichnet, daß** die Vorrichtung nach einem der Ansprüche 1 bis 8 verwendet wird.

## Revendications

1. Dispositif de nettoyage de vitres d'aquarium, en particulier la face interne de celles-ci, comprenant un élément interne (1) qui doit être placé sur la face interne de la vitre d'aquarium (12), de même qu'un élément externe (2) qui doit être placé sur la face externe de la vitre d'aquarium (12), lesquels éléments interne et externe (1, 2) s'attirent mutuellement sous l'influence de forces magnétiques, de telle sorte que le déplacement de l'élément externe le long de la vitre d'aquarium fait que l'élément interne suit ce déplacement, **caractérisé en ce que** l'élément (1) qui doit être placé sur la face interne de l'aquarium, est constitué de telle sorte, qu'une fois les forces magnétiques éliminées, il flotte sur le milieu liquide (13) contenu dans l'aquarium (11).

2. Dispositif selon la revendication 1, **caractérisé en ce que** l'élément interne (1) comprend une chambre d'air qui assure la flottabilité de l'élément interne.

3. Dispositif selon l'une quelconque des revendications 1 et 2, **caractérisé en ce que** l'élément interne (1), dans le but d'obtenir la flottabilité, comporte un matériau qui présente une densité inférieure à celle du milieu liquide (13) présent dans l'aquarium (11).

4. Dispositif selon l'une quelconque des revendications 1 à 3, **caractérisé en ce qu'**à la fois l'élément interne (1) et l'élément externe (2) sont équipés d'un ou plusieurs aimants (6).

5. Dispositif selon l'une quelconque des revendications 1 à 3, **caractérisé en ce que** l'élément interne (1) comporte un matériau qui peut être attiré par un champ magnétique.

6. Dispositif selon l'une quelconque des revendications 1 à 5, **caractérisé en ce que** l'élément interne (1) présente une surface rugueuse sur sa face parallèle à la vitre d'aquarium (12).

7. Dispositif selon l'une quelconque des revendications 1 à 5, **caractérisé en ce que** l'élément externe (2) présente une surface lisse sur sa face parallèle à la vitre d'aquarium (12).

8. Dispositif selon la revendication 7, **caractérisé en ce que** ladite surface lisse est obtenue en utilisant un matériau du type feutre.

9. Procédé de nettoyage de vitres d'aquarium, en particulier la face interne de celles-ci, en utilisant un élément interne (1) qui doit être placé sur la face interne de la vitre d'aquarium (12) et un élément externe (2) qui doit être placé sur la face externe de la vitre d'aquarium, lesquels éléments s'attirent mutuellement sous l'influence de forces magnétiques, dans lequel l'élément externe (2) est déplacé le long de la vitre d'aquarium et l'élément interne suit ledit mouvement sous l'influence des forces magnétiques, **caractérisé en ce que** le dispositif selon l'une quelconque des revendications 1 à 8 est utilisé.
